Europäisches Patentamt

European Patent Office

Office européen des brevets

(19)

(11) Numéro de publication : **0 447 291 A1**

## (12) DEMANDE DE BREVET EUROPEEN

(21) Numéro de dépôt : **91400584.8**

(51) Int. Cl.⁵ : **C02F 3/34**

(22) Date de dépôt : **04.03.91**

(30) Priorité : **12.03.90 FR 9003097**

(43) Date de publication de la demande :
**18.09.91 Bulletin 91/38**

(84) Etats contractants désignés :
**AT BE DE DK ES FR GB GR IT NL SE**

(71) Demandeur : **COOPERATIVE DES
AGRICULTEURS DE BRETAGNE: Société
Coopérative Agricole dite
Z.I. de Lanrinou
F-29206 Landerneau Cedex (FR)**

(72) Inventeur : **Roudaut, René
18, route de Quimper
F-29000 Brest (FR)**

(74) Mandataire : **Bourgognon, Jean-Marie et al
Cabinet Flechner 22, Avenue de Friedland
F-75008 Paris (FR)**

(54) Composition et procédé de traitement du lisier.

(57)    Elle est constituée d'un support colloïdal de bactéries et de levures. Elevage des porcs.

EP 0 447 291 A1

## COMPOSITION ET PROCEDE DE TRAITEMENT DU LISIER

La présente invention est relative aux compositions et aux procédés de traitement du lisier. Dans le présent mémoire, on entend par lisier, non seulement le lisier des animaux tel que du lisier de porcs, du lisier de bovins, du lisier de lapins, du lisier de volailles et autres, mais également les matières fécales des fosses septiques.

Le lisier stocké dans une fosse présente une croûte en surface et un dépôt au fond qui prennent de plus en plus d'importance avec le temps, au point de rendre pratiquement négligeable la capacité de la fosse. On a déjà proposé d'y remédier, en procédant de la manière suivante : on prémélange dans une "tonne à lisier", 50 g de bactéries et de levures sur support par m³ de volume des croûtes et dépôts à traiter, avec 1000 à 2000 litres de lisier liquide et on laisse fermenter pendant 24 à 48 heures. Cette opération est difficile à réaliser, car il faut introduire le mélange bactérien dans la tonne, par un orifice et le lisier par un autre. Or, bien souvent, les tonnes n'ont qu'une seule entrée accessible par la pompe d'aspiration du lisier. Une fois la fermentation terminée, l'éleveur dispose d'un "pied de cuve", dont il asperge à la lance la croûte de lisier à traiter. Il s'agit d'une opération difficile et rebutante. En outre, les croûtes du lisier sont généralement peu accessibles, notamment lorsque les fosses sont couvertes et dites "caillebotis intégral ou partiel".

L'invention pallie ces inconvénients par une composition de traitement du lisier que l'éleveur peut répandre directement à la surface du lisier, sans avoir à préparer un pied de cuve préliminaire permettant au mélange de bactéries et de levures de se multiplier.

La composition de traitement du lisier suivant l'invention, qui est constituée de bactéries et de levures sur un support, est caractérisée en ce que le support comprend une substance colloïdale. Grâce à cela, la composition reste en suspension dans le lisier où les bactéries trouvent leur matière nutritive, sans tomber au fond. Avantageusement, le support comprend de 6 à 12 % en poids de substances colloïdales. Les substances colloïdales peuvent être des substances organiques, comme de la gomme de guar, de la gomme de caroube, des carraghénates, de la caséine et du caséinate de sodium, de potassium ou de calcium, des amidons et leurs dérivés, de la gélatine, de la cellulose et ses dérivés, ou de la pectine. Mais on préfère tout particulièrement l'acide alginique et les alginates de sodium, de potassium et de calcium et, notamment, un résidu d'algues riches en cellulose et en protéines et contenant encore environ 8 % en poids sec d'acide alginique, parce que, d'une part, il est accessible à bas prix et parce que, d'autre part, il contient des substances nutritives utiles pour les bactéries. Mais on peut également utiliser une substance colloïdale minérale, telle que du polyphosphate de sodium, de calcium ou de potassium, du silicate d'alumine ou analogues.

Les bactéries sont présentes sur le support à raison de $10^5$ à $10^9$ germes/gramme et, de préférence, à raison de $10^6$ à $10^8$ germes/gramme. Parmi les bactéries qu'on peut utiliser, figurent notamment Bacillus subtilis, Bacillus cereus, Bacillus brevis et les bactéries lactiques, Lactobacillus plantarum, Lactobacillus brevis et les Leuconostocs. Les levures sont au nombre de $10^5$ à $10^9$ germes/gramme et, de préférence, de $10^6$ à $10^8$ germes/gramme. On peut utiliser notamment Saccharomyces, Candida, Rhodotorula et Geotrichum.

De préférence, le support comporte un complément minéral comportant du fer, par exemple du sulfate ferreux en une quantité représentant de 2 à 25 % et, de préférence, 12,5 % environ du poids de la composition, du sulfate ferrique en une quantité analogue à celle du sulfate ferreux, du potassium en une quantité représentant 0,2 % en poids de la composition, du phosphore en une quantité représentant 0,2 % en poids environ en poids de la composition, du sodium en une quantité représentant 0,6 % environ en poids de la composition, du calcium en une quantité représentant 2,25 % environ en poids de la composition, du cuivre et du zinc en quelques dizaines de parties par million en poids de la composition et du bore en des quantités équivalentes à celles des deux constituants précédents.

De préférence également, le support comporte un complément organique qui peut comprendre de 10 à 50 % de matières cellulosiques et de 1 à 6 % en poids de matières grasses, ainsi que de 10 à 40 % en poids de matières protéiques parmi lesquelles figurent les acides aminés que sont l'acide aspartique, la thréonine, la sérine, l'acide glutamique, la proline, la glycine, l'alanine, la cystine, la valine, l'isoleucine, la leucine, la tyrosine, la phénylalanine, la lysine et l'arginine.

Le produit se présente en général sous la forme de granulés d'une dimension inférieure à 2 mm.

L'invention vise également un procédé de traitement du lisier qui consiste à épandre la composition suivant l'invention à la surface du lisier, à la dose de 50 à 300 g ou, de préférence, de 100 à 200 g/m³ de croûte ou de dépôt du lisier à traiter. Dans le cas d'une croûte sèche, il est recommandé d'en réhumidifier la surface par un arrosage de 2 à 3 mm. Trois à quatre jours après, on voit apparaître en surface des bulles de gaz carbonique. Quatre à cinq semaines après le début du traitement, le lisier est totalement liquide. Il circule facilement dans les canalisations et peut être pompé sans difficulté, la fosse ayant retrouvé ainsi toute sa capacité. Dans le milieu nutritif fourni par le support, les bactéries clivent les substances colloïdales et organiques ajoutées en éléments assimilables par les levures. Celles-ci se développent en milieu anaérobie en produisant un dégagement de gaz carbonique. Ce gaz, libéré en microbulles, remonte en surface en assurant un mélange du lisier liquide, des croûtes et des dépôts et en entraînant leur meilleure dégradation ultérieure par les bactéries et par les levures.

Les exemples suivants illustrent l'invention.

## Exemple 1

On utilise un support constitué de 50 g de sulfate ferreux et de 50 g de sulfate ferrique et comprenant $1,710^7$ germes de Bacillus cereus/gramme et $1,710^7$ germes de levure Saccharomyces cerevisiae/gramme à 3 parties en poids d'un coproduit de la fabrication de l'acide alginique à partir d'algues marines. Ce produit a été obtenu en plaçant les algues brutes Laminaria digitata, Fucus, Ascophylum dans une solution saturée de carbonate de sodium, ce qui provoque la dissolution rapide de l'acide alginique, avec formation d'alginate de sodium. Après filtration, on recueille une fraction liquide qui, par acidification, donne de l'acide alginique et un résidu solide qui est la fraction non attaquée de l'algue qui est riche en cellulose et en protéines et qui contient encore 8 % en poids sec d'acide alginique. On sèche rapidement ce résidu solide dans un séchoir du type séchoir à fourrage pour obtenir un produit pulvérulent brun ayant environ 10 % d'eau et contenant 28,0 % en poids de protéines, 3,4 % en poids de matières grasses, 43,0 % en poids de matières cellulosiques et 9,3 % en poids de matières minérales. C'est ce produit que l'on mélange aux sulfates de fer portant les bactéries et les levures. On obtient ainsi une composition suivant l'invention sous forme de granulés dont 25 % ont une dimension inférieure à 0,2 mm, dont 50 % ont une dimension comprise entre 0,2 et 1 mm et dont 25 % ont une dimension comprise entre 1 mm et 2 mm. La densité du produit est de 0,71. La composition de traitement comprend $1,7$ $10^7$ germes de Bacillus cereus/gramme, $1,7$ $10^7$ germes de levures Saccharomyces cerevisiae/gramme, 12,5 % en poids de sulfate ferreux, 12,5 % en poids de sulfate ferrique, 6 % en poids d'acide alginique, 19,75 % en poids de protéines, 2,50 % en poids de matière grasse, 31,75 % en poids de matières cellulosiques, 2,25 % en poids de calcium, 0,60 % en poids de sodium, 0,20 % en poids de phosphore, 0,20 % en poids de potassium, 10,50 % en poids d'humidité et 1,25 % en poids d'oligo-éléments. Les acides aminés sont présents en les quantités pondérales suivantes :

| Acide aspartique | 21 °/°° |
| Thréonine | 10,5 °/°° |
| Sérine | 9,6 °/°° |
| Acide glutamique | 23,0 °/°° |
| Proline | 4,9 °/°° |
| Glycine | 11,7 °/°° |
| Alanine | 14,1 °/°° |
| Cystine | 3,2 °/°° |
| Valine | 10,8 °/°° |
| Méthionine | 3,2 °/°° |
| Isoleucine | 8,9 °/°° |
| Leucine | 15,8 °/°° |
| Tyrosine | 2,2 °/°° |
| Phénylalanine | 8,5 °/°° |
| Lysine | 6,5 °/°° |
| Arginine | 7,7 °/°° |

On épand à la volée, sur le caillebotis d'une fosse de 25 m x 4 m de stockage de lisier d'un élevage de porcs, dont la hauteur du dépôt en fond de fosse est de 0,60 m, dont l'épaisseur de la croûte est de 0,15 m et dont l'épaisseur de la phase liquide est de 0,50 m, le volume de la croûte étant de 15 m³, celui du dépôt de 60 m³ et le volume à traiter de 75 m³, 11,250 kg de la composition préparée ci-dessus, ce qui représente une dose de 150 g/m³. On épand à la volée sur le caillebotis la composition suivant l'invention en recherchant une répartition aussi homogène que possible. On arrose le caillebotis au jet d'eau pour faire descendre la composition suivant l'invention sur la croûte dans la fosse, puis on arrose de manière à obtenir une hauteur d'eau de 2 à 3 mm.

7 jours après le traitement, on observe l'apparition de fissures dans la croûte avec formation de bulles.

15 jours après le traitement, l'épaisseur de la croûte a diminué de 5 cm : elle devient humide pratiquement sur toute son épaisseur.

Quatre semaines après le traitement, les insectes, ténébrions et larves ont disparu de la croûte. Elle n'a plus qu'une épaisseur de 5 à 10 cm.

Cinq semaines après le traitement, la croûte ne recouvre plus que 5 % de la surface du lisier.

Lors de la vidange de la fosse, six semaines après le traitement, le dépôt qui ne peut pas être pompé n'a qu'une hauteur de 25 cm.

### Exemple 2

On reprend l'exemple 1, si ce n'est que la fosse de stockage du lisier de porc a une longueur de 22 m et une largeur de 2,50 m. La hauteur du dépôt en fond de fosse est de 0,65 m. Le volume du dépôt à biodégrader est de 35,65 m³. On utilise 5,4 kg de la composition suivant l'invention que l'on répand uniformément en surface du lisier (le lisier n'ayant pas de croûte, on n'en arrose pas la surface).

Deux semaines après le traitement, on observe la formation de bulles en surface.

Cinq semaines après le traitement, lors de la vidange de la fosse, la hauteur du dépôt au fond de la fosse n'est plus que de 0,35 m.

### Exemple 3

On traite une fosse de lisier de bovins d'une longueur de 15 m et d'une largeur de 7 m qui a une croûte pailleuse de 0,20 cm d'épaisseur, une couche liquide de 1,50 m et un dépôt solide au fond de la fosse de 0,55 cm. Le volume à traiter est de 79 m³. La composition suivant l'invention est constituée d'un mélange de bactéries Bacillus cireus au nombre de $10^7$ germes/gramme, de Streptococcus lactis au nombre de $10^7$ germes/gramme et de levures Saccharomyces au nombre de $10^7$ germes/gramme sur un support de sulfate ferreux et de sulfate ferrique comprenant, comme substance colloïdale, 6 % en poids du coproduit de fabrication d'acide alginique à partir d'algues marines.

On épand la composition suivant l'invention à raison de 100 g/m³, ce qui nécessite 7,9 kg pour l'ensemble de la fosse. On l'épand à la volée, le plus uniformément possible, puis on l'arrose par aspersion de 3 à 4 mm d'eau.

7 jours après, on observe une diminution de la croûte, son épaisseur n'étant plus que de 15 cm. Des bulles apparaissent par les fissures.

Six semaines après le traitement, la croûte a disparu complètement.

Lors de la vidange de la fosse, 7 semaines après le traitement, le dépôt qui ne peut pas être pompé n'est que de 25 cm.

Le tableau 1 suivant donne l'analyse du lisier traité à l'exemple 1.

Tableau 1

Analyses de lisier

| | Dépôt de fond de fosse | Phase liquide du lisier | Croûte du lisier | Lisier après traitement |
|---|---|---|---|---|
| Matière sèche (% en poids) | 9,9 | 2,62 | 20,90 | 4,48 |
| Matières minérales (% en poids) | 3,2 | 0,96 | 5,15 | 1,82 |
| Azote total (N) (% en poids) | 0,96 | 0,62 | 1,02 | 0,70 |
| Phosphates tx (P205) (% en poids) | 0,21 | 0,08 | 1,25 | 0,45 |
| Potasse totale (K₂0) (% en poids) | 0,50 | 0,42 | 1,41 | 0,48 |

**Revendications**

1. Composition de traitement du lisier constituée de bactéries et de levures sur un support, caractérisée en ce que le support comprend une substance colloïdale.

2. Composition suivant la revendication 1, caractérisée en ce que la substance colloïdale représente de 6 à 12 % du poids de la composition.

3. Composition suivant la revendication 1 ou 2, caractérisée en ce que la substance colloïdale est une substance organique choisie parmi la gomme de guar, la gomme de caroube, les carraghénates, la caséine et les caséinates de sodium, de potassium et de calcium, l'amidon et ses dérivés, la gélatine, la cellulose et ses dérivés, la pectine et, de préférence, l'acide alginique et les alginates de sodium, de potassium et de calcium.

4. Composition suivant la revendication 1 ou 2, caractérisée en ce que la substance colloïdale est une substance minérale choisie parmi le polyphosphate de sodium, de calcium et de potassium et le silicate d'alumine.

5. Composition suivant l'une des revendications précédentes, caractérisée en ce que les bactéries sont Bacillus subtilis, Bacillus cereus, Bacillus brevis, les bactéries lactiques, telles que Lactobacillus plantarum, Lactobacillus brevis ou les Leuconostocs.

6. Composition suivant l'une des revendications précédentes, caractérisée en ce que les levures sont Saccharomyces, Candida, Rhodotorula ou Geotrichum.

7. Composition suivant l'une des revendications précédentes, caractérisée en ce que les bactéries sont au nombre de $10^5$ à $10^9$ germes/gramme du support.

8. Composition suivant l'une des revendications précédentes, caractérisée en ce que les levures sont au nombre de $10^5$ à $10^9$ germes/gramme du support.

9. Composition suivant l'une des revendications précédentes, caractérisée en ce que le support comprend de 2 à 25 % en poids de sulfate ferreux, de 2 à 25 % en poids de sulfate ferrique et des pourcentages inférieurs à 1 % de potassium, de phosphore, de sodium, de calcium, de cuivre, de zinc et de bore.

10. Composition suivant l'une des revendications précédentes, caractérisée en ce que le support comprend de 10 à 50 % en poids de matières cellulosiques, de 10 à 40 % en poids de matières protéiques et de 1 à 6 % en poids de matières grasses.

11. Procédé de traitement du lisier, caractérisé en ce qu'il consiste à lui ajouter de 50 à 30 g de la composition suivant l'une des revendications précédentes par $m^3$ de croûte ou de dépôt de lisier à traiter.

12. Procédé de préparation d'une composition de traitement du lisier caractérisé en ce qu'il consiste à mélanger les constituants de la composition suivant les revendications 1 à 10.

EP 0 447 291 A1

**Office européen des brevets**

# RAPPORT DE RECHERCHE EUROPEENNE

Numero de la demande

EP 91 40 0584

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-248709 (EPARCO)<br>* page 2, ligne 39 - page 3, ligne 7 *<br>---- | 1, 4, 9 | C02F3/34 |
| A | AT-A-374116 (F.ZLATOHLAWEK)<br>* page 2, lignes 20 - 30 *<br>--- | 1 | |
| A | FR-A-2357490 (EPARCO)<br>* revendications 1-9 *<br>----- | 1, 4, 9 | |
| | | | **DOMAINES TECHNIQUES RECHERCHES (Int. Cl.5)**<br><br>C02F |

Le présent rapport a été établi pour toutes les revendications

| Lieu de la recherche | Date d'achèvement de la recherche | Examinateur |
|---|---|---|
| LA HAYE | 30 MAI 1991 | GONZALEZ Y ARIAS M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)